# EUROPEAN PATENT SPECIFICATION

(11) **EP 3 962 965 B1**
(45) Date of publication and mention of the grant of the patent: **14.10.2026**
(21) Application number: 20799013.6
(22) Date of filing: 28.02.2020
(51) Int. Cl.: C08F 2/48, C08F 2/50, C09D 11/101, C08F 222/10, C08L 33/08

(54) **PRODUCTION OF POLYMERIC MATERIAL WHICH CAN BE CURED RAPIDLY BY MEANS OF THE EFFECT OF ULTRAVIOLET (UV) RAYS**
HERSTELLUNG VON POLYMEREM MATERIAL, DAS DURCH EINWIRKUNG VON ULTRAVIOLETTEN (UV) STRAHLEN SCHNELL GEHÄRTET WERDEN KANN
PRODUCTION D'UN MATÉRIAU POLYMÈRE QUI PEUT DURCIR RAPIDEMENT SOUS L'EFFET DES RAYONS ULTRAVIOLETS (UV)

(30) Priority: 02.05.2019 TR 201906545
(43) Date of publication of application: 09.03.2022
(73) Proprietor: Bahçesehir Üniversitesi, 34353 Besiktas/Istanbul (TR); Piri Reis Universitesi, 34940 Tuzla/Istanbul (TR)
(72) Inventor: GUNDUZ AKDOGAN, Nilay, 34940 Tuzla/Istanbul (TR); ERKOC ERIK, Pelin, Besiktas/Istanbul (TR); AKDOGAN, Ozan, Tuzla Istanbul (TR)
(74) Representative: Kaya, Erdem
(86) International application number: PCT/TR2020/050163
(87) International publication number: WO 2020/222709

(56) References cited:
- EP-A1- 0 473 643
- WO-A1-2018/219729
- WO-A1-98/04650
- US-A1- 2017 252 304
- US-B2- 7 304 095
- US-B2- 9 334 423
- BAGHERI ALI ET AL: "Photopolymerization in 3D Printing", vol. 1, no. 4, 20 February 2019 (2019-02-20), pages 593 - 611, XP055919166, ISSN: 2637-6105, Retrieved from the Internet <URL:http://pubs.acs.org/doi/pdf/10.1021/acsapm.8b00165> DOI: 10.1021/acsapm.8b00165
- YIN HANG ET AL: "Orthogonal programming of heterogeneous micro-mechano-environments and geometries in three-dimensional bio-stereolithography", NATURE COMMUNICATIONS, vol. 9, no. 1, 5 October 2018 (2018-10-05), XP093035839, Retrieved from the Internet <URL:https://www.nature.com/articles/s41467-018-06685-1> DOI: 10.1038/s41467-018-06685-1
- FAIRBANKS B D ET AL: "Photoinitiated polymerization of PEG-diacrylate with lithium phenyl-2,4,6-trimethylbenzoylphosphinate: polymerization rate and cytocompatibility", BIOMATERIALS, ELSEVIER, AMSTERDAM, NL, vol. 30, no. 35, 1 December 2009 (2009-12-01), pages 6702 - 6707, XP026693723, ISSN: 0142-9612, [retrieved on 20090923], DOI: 10.1016/J.BIOMATERIALS.2009.08.055
- SAMUEL CLARK LIGON ET AL: "Polymers for 3D Printing and Customized Additive Manufacturing", CHEMICAL REVIEWS, vol. 117, no. 15, 30 July 2017 (2017-07-30), US, pages 10212 - 10290, XP055516091, ISSN: 0009-2665, DOI: 10.1021/acs.chemrev.7b00074

## Description

### TECHNICAL FIELD

The present invention relates to production of a polymer material having rapidly curing characteristic by means of the effect of ultraviolet ray.

### PRIOR ART

Polymers are formed by arranging pluralities of molecules, called monomers, in a sequenced manner. Most of the polymers are formed by arranging a single type of monomer. Some of them can be formed by bringing together two or three monomer types. The characteristic properties of polymers are their low density, low resistance and high mechanical dampening. Polymers cannot generally show resistance against low and high temperatures and they are used at room temperatures.

Ultraviolet (UV) waves have shorter wavelength when compared with visible light. Human eye cannot see these wavelengths. Scientists have separated the ultraviolet part of the spectrum into three; this classification can also be applied by physicists in the same manner as near UV (320-400 nm), middle UV (200-320 nm) and vacuum UV (10-200 nm).

When photo-polymers are subjected to light energy, they enter into chemical reaction and their mechanical and chemical structure changes. Photo-polymers are activated in lights with different wavelengths with respect to their types. Moreover, the amount of energy, to which is being subjected depending on the power and duration of light, changes the cure level.

In systems which cure by means of ultraviolet rays, UV rays are used for initiating polymerization. The reaction formed by UV rays provides transformation of a liquid system into a solid system having characteristics like rubber or glass at room temperature and within a few seconds. The coating passed through the conveyor with adjustable speed and where UV lamps exist is cross bonded within a few seconds and is transformed into a structure which is completely hardened. All reactive components, existing in systems which can be hardened by UV, enter into reaction and they exist in the web structure of the polymer. There is no solvent in such coating formulations. In their compositions, there are photo-initiators, monomers (for cross binding), filling substances and various additive substances. Among the advantages of photo-polymers which are cured by UV rays; rapid production is provided since the cross bonded structure is formed in a very rapid manner (thanks to this, the stacking ability also increases), they have low investment and production costs, they do not comprise volatile organic solvent which is harmful for the environment and for the health, and they can be applied at room temperature and they have a wide application area.

The basic components forming the protective coating formulations prepared by means of UV rays are reactive oligomers or monomers and photo-initiators. At the same time, additive chemicals (rheology agents, foam eliminators, dispersants, surface regulators, etc.) are added for providing different characteristics to the coating, and fillings (in systems with pigment) are added for decreasing cost.

There are two problems which must be overcome in industrial systems where polymer production is realized in big scales. These difficulties are primarily the insufficient heat transfer and high viscosity. These difficulties are eliminated by applying different polymerization methods where the characteristics of polymerization medium are changed.

One of the problems faced in the prior art is the usage of solvent for polymerization processes. Since solvent usage dilutes polymerization medium, it provides decrease of viscosity. However, the removal of the solvent is costly and difficult.

One of the other problems faced in the prior art is the need for high energy light source for realization of curing. This problem leads to curing process to have higher-cost.

The problems like susceptibility of photo-initiators and/or monomers to medium conditions and deteriorating thereof rapidly are important for the selection of the beginning materials.

As one of the studies in the relevant technical field, patent publication EP0473643 A1 relates to photocurable pigmented coating compositions suitable for use as secondary coatings for optical fibers. The aim of this patent is to provide a pigmented secondary coating composition which allows optical fibers to be colored, while also curing rapidly and maintaining its mechanical properties. For this purpose, the patent uses a (meth)acrylate-functional photocurable coating composition including pigment particles having a size below about 1 micron and an acyl phosphine oxide type photoinitiator.

As a result, because of all of the abovementioned problems, an improvement is required in the related technical field.

### BRIEF DESCRIPTION OF THE INVENTION

The present invention relates to production of a polymer material having rapid curing characteristic by means of the effect of ultraviolet rays, for eliminating the above mentioned disadvantages and for bringing new advantages to the related technical field.

The main object of the present invention is to provide a polymer material which has curing process characteristic in short time.

Another object of the present invention is to provide a polymer material which can be used as additive (filling) material or main material in three-dimensional printers.

Another object of the present invention is to provide a polymer material which needs low energy light source for realization of the curing process.

Another object of the present invention is to provide a production method of a polymer material in which lithium phenyl-2,4,6-trimethylbenzoylphosphinate is used as a photo-initiator.

In order to realize the abovementioned objects and the objects which are to be deducted from the detailed description below, the present invention is production of polymer material having rapidly curing characteristic by means of the effect of ultraviolet (UV) rays. Accordingly, in order to provide obtaining said polymer, said production method is characterized by comprising the steps of:
i. dissolving lithium phenyl-2,4,6-trimethylbenzoylphosphinate in water in order to obtain a water-lithium phenyl-2,4,6-trimethylbenzoylphosphinate solution,
ii. adding pentaerythritoltriacrylate monomer to the obtained water-lithium phenyl-2,4,6-trimethylbenzoylphosphinate solution in order to obtain a photo-initiator-monomer solution,
iii. adding triethanolamine as a co-initiator and 1-vinyl-2 pyrrolidinone as an accelerator to the photo-initiator-monomer solution,
iv. applying a curing process to the obtained solution in an ultraviolet radiation region.

In the present invention, the amount of lithium phenyl-2,4,6-trimethylbenzoylphosphinate is between 0.0002% and 0.002% by weight with respect to the amount of the pentaerythritoltriacrylate monomer.

In the present invention, triethanolamine, which is called TEA in the literature, is added into the photo-initiator-monomer solution as a co-initiator in an amount of 0.05% by weight.

In the present invention, 1-vinyl-2 pyrrolidinone, which is called NVP or VP in the literature, is added into the photo-initiator-monomer solution as an accelerator in an amount of 0.03% by weight.

Thus, lithium phenyl-2,4,6-trimethylbenzoylphosphinate and triethanolamine are activated by ultraviolet rays, thereby forming radicals and initiating the curing process of the solution including pentaerythritoltriacrylate and 1-vinyl-2 pyrrolidinone.

In the present invention, in order to realize the curing process of the solution, the wavelength of light is between 365 and 400 nanometers.

In the present invention, in order to realize curing process of the beginning solution, the energy of light is between 3 and 5 watts.

In the present invention, in order to obtain polymer material, the curing process is completed between 1 and 2 seconds.

### DETAILED DESCRIPTION OF THE INVENTION

In this detailed description, the subject matter production of polymer material, having rapid curing characteristic by means of the effect of ultraviolet (UV) ray, is explained with references to examples without forming any restrictive effect only in order to make the subject more understandable.

Polymerization reactions initiated by ultraviolet light are called photo-polymerization. In general, ultraviolet or visible region light sources may be used. Reactive species formed as a result of light absorption by the photo-initiator at a suitable wavelength initiate polymerization and provide transformation of multi-functional monomers into cross-linked structures. Photo-initiated polymerization provides advantages such as high polymerization speed at room temperature, low energy consumption, polymerization without using solvent, and control of the application area and application duration.

The subject of the present invention is to provide production method of a polymer material realized with low light energy and rapid curing process. The obtained polymer material may be used as resin material for three-dimensional (3D) printers or as a material suitable for applications requiring rapid ultraviolet curing.

The production method of the invention comprises pentaerythritoltriacrylate as a monomer, lithium phenyl-2,4,6-trimethylbenzoylphosphinate as a photo-initiator, triethanolamine as a co-initiator, and 1-vinyl-2 pyrrolidinone as an accelerator for producing the polymer material by means of an ultraviolet curing process.

In the invention, as monomer (the smallest unit which forms a very long polymer structure by coming together), pentaerythritol triacrylate (it will be called PETA) described in Formula 1 is used.

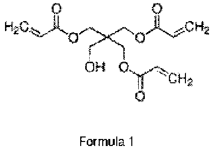

The primer radicals formed as a result of light absorption by the photo-initiator at a suitable wavelength transform multi-functional acrylates into cross-linked structures. The efficiency of the photo-initiator system is related to the UV absorption characteristic of the photo-initiator, radical formation, contribution of the radical to the monomer, low toxicity, and storage stability. In the invention, lithium phenyl-2,4,6-trimethylbenzoylphosphinate is used as the photo-initiator (hereafter it will be called LAP) described in Formula 2 is used.

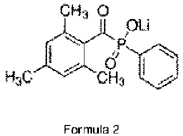

In the invention, triethanolamine, which is called TEA in the literature and is shown in Formula 3, is used to the co-initiator. Electron transfer is realized through TEA and alpha-amino radicals are formed. This activated molecule supports the formation of the radicals and initiates the polymerization. process

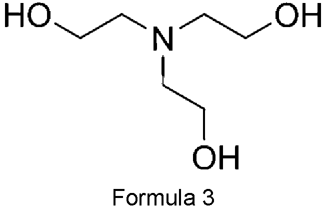

In the invention, 1-vinyl-2 pyrrolidinone, which is called NVP in the literature and is shown in Formula 4, is used as the accelerator. It provides acceleration of the polymerization reaction.

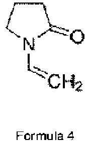

The present invention relates to production method of a polymer material by applying an ultraviolet curing process pentaerythritoltriacrylate as a monomer, lithium phenyl-2,4,6-trimethylbenzoylphosphinate as a photo-initiator, triethanolamine as a co-initiator, and 1-vinyl-2 pyrrolidinone as an accelerator. Accordingly, in order to obtain said polymer material, said production method comprises the following steps respectively:
i. dissolving lithium phenyl-2,4,6-trimethylbenzoylphosphinate in water in order to obtain a water-lithium phenyl-2,4,6-trimethylbenzoylphosphinate solution,
ii. adding pentaerythritoltriacrylate monomer to the obtained water-lithium phenyl-2,4,6-trimethylbenzoylphosphinate solution in order to obtain a photo-initiator-monomer solution,
iii. adding triethanolamine as a co-initiator and 1-vinyl-2 pyrrolidinone as an accelerator to the photo-initiator-monomer solution,
iv. applying a curing process to the obtained solution in an ultraviolet radiation region.

In step (i), the amount of lithium phenyl-2,4,6-trimethylbenzoylphosphinate in water is between 1.46% and 7.66% by weight.

In step (ii), the amount of lithium phenyl-2,4,6-trimethylbenzoylphosphinate is between 0.0002% and 0.002% by weight with respect to the amount of the monomer component.

In step (iii), the amount of triethanolamine, provided as the co-initiator, in the photo-initiator-monomer solution is 0.05% by weight.

In step (iii), the amount of 1-vinyl-2 pyrrolidinone, provided as the accelerator, in the photo-initiator-monomer solution is 0.03% by weight.

In step (iv), in order to realize the curing process of the solution, the wavelength of light is between 365 and 400 nanometers.

In step (iv), in order to realize the curing process of the solution, the light energy is between 3 and 5 watts.

In step (iv), the curing process of the solution is completed within 1 and 2 seconds.

The protection scope of the present invention is set forth in the annexed claims.

## Claims

1. A production method of a polymer material having rapidly curing characteristic by an effect of an ultraviolet ray without needing a high-energy light source and having a low toxicity value, wherein said production method is **characterized by** comprising the following steps of:
i. dissolving the photo-initiator lithium phenyl-2,4,6-trimethylbenzoylphosphinate in water to obtain a water- lithium phenyl-2,4,6-trimethylbenzoylphosphinate solution,
ii. adding monomer pentaerythritoltriacrylate to the obtained water-lithium phenyl-2,4,6-trimethylbenzoylphosphinate solution to obtain a photo-initiator-monomer solution,
iii. adding triethanolamine and 1-vinyl-2 pyrrolidinone to the photo-initiator-monomer solution, wherein the triethanolamine functions as a co-initiator, and the 1-vinyl-2 pyrrolidinone functions as an accelerator,
iv. applying curing processes to the obtained solution in ultraviolet radiation region,
in step (iv), in order to realize curing process of the said solution, the wavelength of light is applied at a value between 365 and 400 nanometers,
in step (iv), the solution is completed within 1-2 seconds by using light energy of 3-5 watts of light energy to perform the curing process.

2. The production method according to claim 1, **wherein** in step (i), an amount of the photo-initiator lithium phenyl-2,4,6-trimethylbenzoylphosphinate in water is between 1.46% and 7.33% by weight.

3. The production method according to claim 1, **wherein** in step (ii), an amount of the photo-initiator lithium phenyl-2,4,6-trimethylbenzoylphosphinate is at a value between 0.0002% and 0.002% by weight with respect to the amount of a monomer component.

4. The production method according to claim 1, **wherein** in step (iii), an amount of the triethanolamine, provided as the co-initiator, in the photo-initiator-monomer solution is 0.05% by weight.

5. The production method according to claim 1, **wherein** in step (iii), an amount of the 1-vinyl-2 pyrrolidinone, provided as accelerator, in the photo-initiator-monomer solution is 0.03% by weight.

## Patentansprüche

1. Herstellungsverfahren für ein Polymermaterial, das eine durch die Wirkung von ultravioletter Strahlung schnell aushärtende Eigenschaft aufweist, ohne dass eine Lichtquelle mit hoher Energie erforderlich ist, und einen niedrigen Toxizitätswert aufweist, wobei das Herstellungsverfahren **dadurch gekennzeichnet ist, dass** es die folgenden Schritte umfasst:
i. Auflösen des Photoinitiators Lithiumphenyl-2,4,6-trimethylbenzoylphosphinat in Wasser, um eine Wasser-Lithiumphenyl-2,4,6-trimethylbenzoylphosphinat-Lösung zu erhalten,
ii. Zugeben des Monomers Pentaerythritoltriacrylat zu der erhaltenen Wasser-Lithiumphenyl-2,4,6-trimethylbenzoylphosphinat-Lösung, um eine Photoinitiator-Monomer-Lösung zu erhalten,
iii. Zugeben von Triethanolamin und 1-Vinyl-2-pyrrolidinon zu der Photoinitiator-Monomer-Lösung, wobei das Triethanolamin als Co-Initiator wirkt und das 1-Vinyl-2-pyrrolidinon als Beschleuniger wirkt,
iv. Anwenden von Aushärtungsprozessen auf die erhaltene Lösung im Bereich ultravioletter Strahlung, in Schritt (iv) wird zur Durchführung des Aushärtungsprozesses der genannten Lösung die Wellenlänge des Lichts auf einen Wert zwischen 365 und 400 Nanometern eingestellt, in Schritt (iv) wird die Lösung innerhalb von 1-2 Sekunden unter Verwendung einer Lichtenergie von 3-5 Watt Lichtenergie zur Durchführung des Aushärtungsprozesses abgeschlossen.

2. Verfahren gemäß Anspruch 1, wobei in Schritt (i) eine Menge des Photoinitiators Lithiumphenyl-2,4,6-trimethylbenzoylphosphinat in Wasser zwischen 1.46 Gew.-% und 7.33 Gew.-% beträgt.

3. Verfahren gemäß Anspruch 1, wobei in Schritt (ii) eine Menge des Photoinitiators Lithiumphenyl-2,4,6-trimethylbenzoylphosphinat bezogen auf die Menge einer Monomerkomponente einen Wert zwischen 0.0002 Gew.-% und 0.002 Gew.-% beträgt.

4. Verfahren gemäß Anspruch 1, wobei in Schritt (iii) eine Menge des als Co-Initiator bereitgestellten Triethanolamins in der Photoinitiator-Monomer-Lösung 0.05 Gew.-% beträgt.

5. Verfahren gemäß Anspruch 1, wobei in Schritt (iii) eine Menge des als Beschleuniger bereitgestellten 1-Vinyl-2-pyrrolidinons in der Photoinitiator-Monomer-Lösung 0.03 Gew.-% beträgt.

## Revendications

1. Méthode de production d'un matériau polymère ayant une caractéristique de durcissement rapide par l'effet d'un rayon ultraviolet sans nécessiter une source de lumière à haute énergie et ayant une faible valeur de toxicité, dans laquelle ladite méthode de production est **caractérisée en ce qu'**elle comprend les étapes suivantes consistant à :
i. dissolution du photoinitiateur lithium phényl-2,4,6-triméthylbenzoylphosphinate dans l'eau pour obtenir une solution aqueuse de lithium phényl-2,4,6-triméthylbenzoylphosphinate,
ii. ajout du monomère pentaérythritoltriacrylate à la solution aqueuse de lithium phényl-2,4,6-triméthylbenzoylphosphinate obtenue pour obtenir une solution de photoinitiateur-monomère,
iii. ajout de triéthanolamine et de 1-vinyl-2-pyrrolidinone à la solution de photoinitiateur-monomère, dans laquelle la triéthanolamine fonctionne comme co-initiateur, et la 1-vinyl-2-pyrrolidinone fonctionne comme accélérateur,
iv. application de processus de durcissement à la solution obtenue dans la région de rayonnement ultraviolet, à l'étape (iv), afin de réaliser le processus de durcissement de ladite solution, la longueur d'onde de la lumière étant appliquée à une valeur comprise entre 365 et 400 nanomètres, à l'étape (iv), la solution étant complétée en 1-2 secondes en utilisant une énergie lumineuse de 3-5 watts d'énergie lumineuse pour effectuer le processus de durcissement.

2. Méthode de production selon la revendication 1, dans laquelle, à l'étape (i), une quantité du photoinitiateur lithium phényl-2,4,6-triméthylbenzoylphosphinate dans l'eau est comprise entre 1.46 % et 7.33 % en poids.

3. Méthode de production selon la revendication 1, dans laquelle, à l'étape (ii), une quantité du photoinitiateur lithium phényl-2,4,6-triméthylbenzoylphosphinate est à une valeur comprise entre 0.0002 % et 0.002 % en poids par rapport à la quantité d'un composant monomère.

4. Méthode de production selon la revendication 1, dans laquelle, à l'étape (iii), une quantité de la triéthanolamine, fournie en tant que co-initiateur, dans la solution de photoinitiateur-monomère est de 0.05 % en poids.

5. Méthode de production selon la revendication 1, dans laquelle, à l'étape (iii), une quantité de la 1-vinyl-2-pyrrolidinone, fournie en tant qu'accélérateur, dans la solution de photoinitiateur-monomère est de 0.03 % en poids.
